# EUROPEAN PATENT APPLICATION

(11) **EP 4 492 264 A1**
(43) Date of publication of application: **15.01.2025**
(21) Application number: 23766347.1
(22) Date of filing: 25.01.2023
(51) Int. Cl.: G06F 18/21, G06T 7/00

(54) **WORK RECOGNITION DEVICE, WORK RECOGNITION METHOD, AND WORK RECOGNITION PROGRAM**

(30) Priority: 11.03.2022 JP 2022038635
(71) Applicant: OMRON Corporation, Kyoto 600-8530 (JP)
(72) Inventor: WADA, Hirotaka, Kyoto-shi, Kyoto 600-8530 (JP); ONDA, Hiroomi, Kyoto-shi, Kyoto 600-8530 (JP); NISHIYUKI, Kenta, Kyoto-shi, Kyoto 600-8530 (JP); MIYAZAKI, Masashi, Kyoto-shi, Kyoto 600-8530 (JP)
(74) Representative: SONN Patentanwälte GmbH & Co KG
(86) International application number: PCT/JP2023/002319
(87) International publication number: WO 2023/171167

(57) **Abstract**

A work recognition device includes a movement information acquisition unit, a work procedure acquisition unit, a movement/standstill determination unit, a break setting unit and an output unit. The movement information acquisition unit acquires movement information relating to movements of a worker. The work procedure acquisition unit acquires work procedure information relating to a predefined work procedure that is a series of tasks to be performed by the worker at plural workbenches. The movement/standstill determination unit determines when the worker is in movement or in standstill on the basis of the movement information. The break setting unit sets breaks between the tasks of the series of tasks on the basis of the work procedure information and results of determining when the worker is in movement or in standstill. The output unit outputs break information relating to the breaks set between the tasks.

## Description

### TECHNICAL FIELD

The technology of the disclosure relates to a work recognition device, a work recognition method and a work recognition program.

### BACKGROUND ART

Japanese Patent Application Laid-Open (JP-A) No. 2020-144830 discloses a work analysis device that generates determination data for determining whether or not correct work is being carried out. This work analysis device includes: an imaging unit that repeatedly images predetermined work in which plural individual tasks are performed by a worker in a predetermined sequence; a setting unit that, on the basis of predetermined actions specified in advance for each of the individual tasks, sets break information for breaks between the individual tasks from detection timings of the predetermined actions in a work video imaged by the imaging unit; and a generation unit that generates the determination data so as to include the work video imaged by the imaging unit and the break information set by the setting unit.

JP-A No. 2021-106338 discloses a motion recognition system for recognizing motions of a moving body relating to an object. The motion recognition system includes: a position obtaining unit that obtains position information of the object; a parameter obtaining unit that obtains a parameter for controlling a camera that corresponds to the position information of the object on the basis of first information associating the position information with the parameter; a camera control unit that sends the parameter obtained by the parameter obtaining unit to the camera; an image obtaining unit that obtains images of the object imaged by the camera; an area information obtaining unit that obtains area information corresponding to the position information of the object on the basis of second information associating the position information with area information representing an area for recognizing motion of the object; and an output unit that outputs the images obtained by the image obtaining unit and the area information acquired by the area information obtaining unit.

### SUMMARY OF INVENTION

### TECHNICAL PROBLEM

It is unusual for work in a factory to be completed at a single workbench; in many situations, a worker moves between plural workbenches and performs plural tasks.

The technology recited in JP-A No. 2020-144830 addresses only work that is completed at a single workbench, and is difficult to apply to a situation of moving between plural workbenches and performing plural tasks.

The technology recited in JP-A No. 2021-106338 uses plural cameras disposed over a wide area to obtain a general position of a worker, and perceives hands of the operator and an object in a small area with a camera zoomed in on the hands and the object.

However, in the technology recited in JP-A No. 2021-106338, respective areas to be viewed by the cameras perceiving the wide-area position of the worker and the camera zoomed in on the hands of the worker and the object must be set manually, which is troublesome.

The present technology is made in consideration of the problem described above, and an object of the technology is to provide a work recognition device, a work recognition method and a work recognition program that may easily set breaks between tasks when a worker moves between plural workbenches and performs plural tasks.

### SOLUTION TO PROBLEM

A first aspect of the disclosure is a work recognition device including: a movement information acquisition unit that acquires movement information relating to movements of a worker; a work procedure acquisition unit that acquires work procedure information relating to a predefined work procedure of a series of tasks to be performed by the worker at a plurality of workbenches; a movement/standstill determination unit that determines when the worker is in movement and in standstill on the basis of the movement information; a break setting unit that sets breaks between the tasks of the series of tasks on the basis of the work procedure information and results of determining when the worker is in movement and in standstill; and an output unit that outputs break information relating to the set breaks between the tasks.

In the first aspect, when the movement/standstill determination unit determines that a state of the worker has switched from standstill to movement, the break setting unit may record an end time of one of the tasks in the break information for setting a break, and when the movement/standstill determination unit determines that a state of the worker has switched from movement to standstill, the break setting unit may record a start time of one of the tasks in the break information for setting a break.

In the first aspect, the movement information may be a captured image imaging the worker, and the movement/standstill determination unit may determine when the worker is in movement and in standstill on the basis of positions of joints of the worker that are identified on the basis of the captured image.

In the first aspect, the movement/standstill determination unit may determine when the worker is in movement and in standstill on the basis of movement amounts of a central position of a circumscribed area circumscribing all the identified joints of the worker.

In the first aspect, the movement/standstill determination unit may determine when the worker is in movement and in standstill on the basis of movement amounts of a position of, among the identified joints of the worker, a joint representing the torso.

A second aspect of the disclosure is a work recognition method including a computer executing processing that includes: acquiring movement information relating to movements of a worker; acquiring work procedure information relating to a predefined work procedure of a series of tasks to be performed by the worker at a plurality of workbenches; determining when the worker is in movement and in standstill on the basis of the movement information; setting breaks between the tasks of the series of tasks on the basis of the work procedure information and results of determining when the worker is in movement or in standstill; and outputting break information relating to the set breaks between the tasks.

A third aspect of the disclosure is a work recognition program executable by a computer to execute processing that includes: acquiring movement information relating to movements of a worker; acquiring work procedure information relating to a predefined work procedure of a series of tasks to be performed by the worker at a plurality of workbenches; determining when the worker is in movement and in standstill on the basis of the movement information; setting breaks between the tasks of the series of tasks on the basis of the work procedure information and results of determining when the worker is in movement or in standstill; and outputting break information relating to the set breaks between the tasks.

### ADVANTAGEOUS EFFECTS OF INVENTION

According to the technology of the disclosure, breaks between tasks may easily be set when a worker is moving between plural workbenches and performing plural tasks.

### BRIEF DESCRIPTION OF DRAWINGS

Fig. 1 is a structural diagram of a work recognition system.
Fig. 2 is a view, seen from above, of a situation in which a worker moves between plural workbenches and performs tasks.
Fig. 3 is a structural diagram showing hardware structures of a work recognition device.
Fig. 4 is a functional block diagram of the work recognition device.
Fig. 5 is a diagram showing an example of work procedure information.
Fig. 6 is a flowchart of work recognition processing.
Fig. 7 is a diagram for describing walking/stationary determination processing.
Fig. 8 is another diagram for describing the walking/stationary determination processing.
Fig. 9 is still another diagram for describing the walking/stationary determination processing.
Fig. 10 is a diagram for describing breaks between tasks.
Fig. 11 is a diagram showing an example of break information.
Fig. 12 is a diagram showing another example of the break information.
Fig. 13 is a diagram showing still another example of the break information.

### DETAILED DESCRIPTION

Below, an example of an embodiment of the present disclosure is described with reference to the drawings. In the drawings, the same reference symbols are assigned to structural elements and portions that are the same or equivalent. Proportional dimensions in the drawings may be exaggerated to facilitate description and may be different from actual proportions.

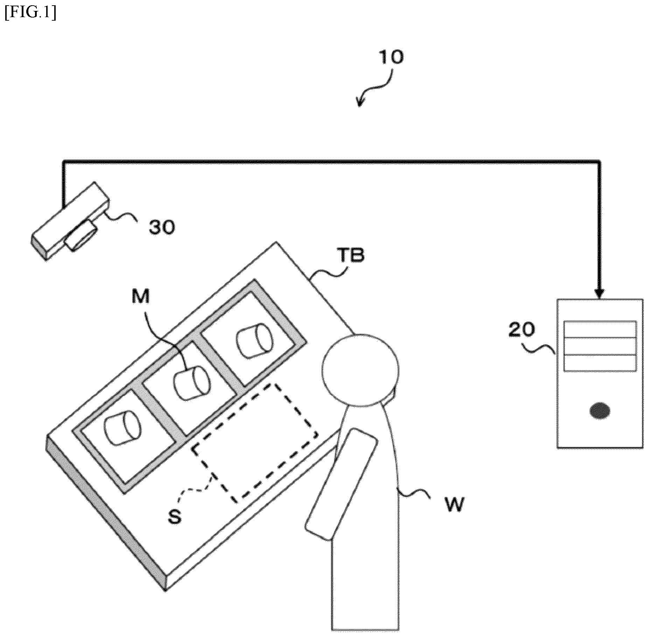

Fig. 1 is a structural diagram of a work recognition system 10. The work recognition system 10 is equipped with a work recognition device 20 and a camera 30.

The work recognition device 20 recognizes details of tasks performed by a worker W on the basis of captured images imaged by the camera 30.

The worker W, for example, pulls up a work object M placed on a workbench TB and performs a predetermined task in a task space S.

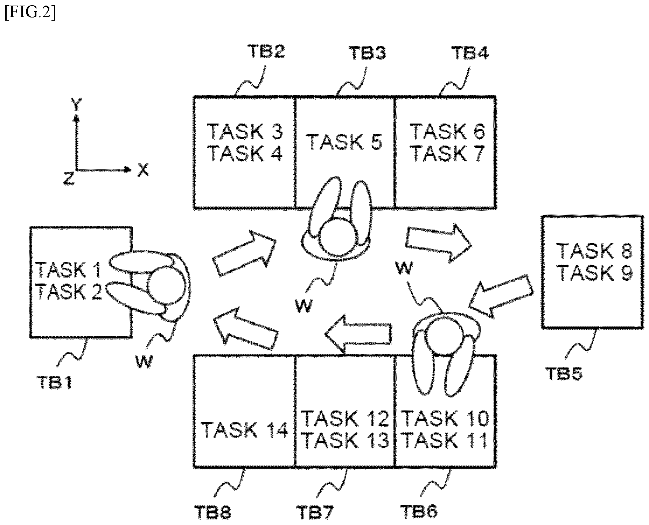

More specifically, as illustrated in Fig. 2, the worker W sequentially moves between plural workbenches TB and performs predetermined tasks at the workbenches TB. In the example in Fig. 2, eight workbenches TB1 to TB8 are disposed to surround the worker W. The worker W moves sequentially from workbench TB1 to workbench TB8, sequentially performing tasks 1 to 14. Tasks 1 to 14 are, as an example, the following tasks, but task details are not limited thus.
Task 1: Join component A to component B
Task 2: Fasten screws
Task 3: Fit to baseboard
Task 4: Clamping
Task 5: Electronic testing
Task 6: Mount component C
Task 7: Mount component D
Task 8: Air brushing
Task 9: Testing
Task 10: Pack instructions
Task 11: Product packing
Task 12: Print label
Task 13: Adhere label
Task 14: Load into shipping box

As shown in Fig. 2, the worker W performs tasks 1 and 2 at workbench TB1, performs tasks 3 and 4 at workbench TB2, performs task 5 at workbench TB3, performs tasks 6 and 7 at workbench TB4, performs tasks 8 and 9 at workbench TB5, performs tasks 10 and 11 at workbench TB6, performs tasks 12 and 13 at workbench TB7, and performs task 14 at workbench TB8.

Below, the plural workbenches may simply be referred to as the workbench(es) TB when not being distinguished. Note that positions of plural workbenches TB, numbers of workbenches TB, types of tasks and numbers of tasks are not limited by the example in Fig. 2.

The camera 30 is, for example, an imaging device capable of imaging RGB color video images. The camera 30 is disposed at a position that facilitates recognition of movements of the worker W and all of the workbenches TB1 to TB8. More specifically, in the present exemplary embodiment a situation is described in which, as in the example illustrated in Fig. 2, the camera 30 is disposed at a position looking down on the worker W and the workbenches TB1 to TB8 from above. If the workbenches TB1 to TB8 are arranged in a row, the camera 30 may be disposed at a position capable of imaging the worker W and the workbenches TB1 to TB8 in a front view.

In the present exemplary embodiment, a configuration with one of the camera 30 is described, but a plural number of the camera 30 may be provided.

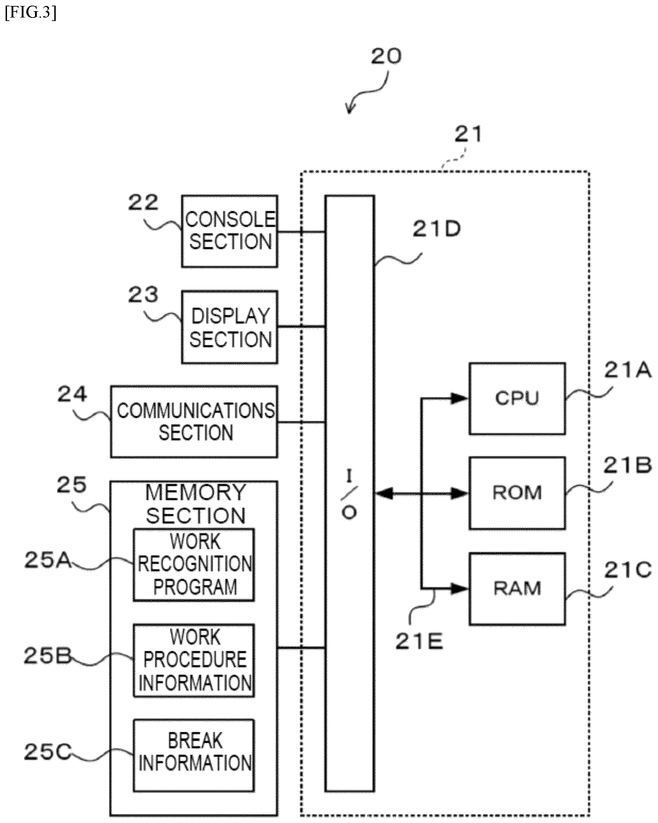

Fig. 3 is a block diagram showing hardware structures of the work recognition device 20 according to the present exemplary embodiment. As shown in Fig. 3, the work recognition device 20 is equipped with a controller 21. The controller 21 is structured by equipment including an ordinary computer.

As shown in Fig. 3, the controller 21 is provided with a central processing unit (CPU) 21A, read-only memory (ROM) 21B, random access memory (RAM) 21C and an input/output interface (I/O) 21D. The CPU 21A, ROM 21B, RAM 21C and input/output interface 21D are connected to one another via a bus 21E. The bus 21E includes a control bus, an address bus and a data bus.

The input/output interface 21D is connected to a console section 22, a display section 23, a communications section 24 and a memory section 25.

The console section 22 includes, for example, a mouse and a keyboard.

The display section 23 is structured as, for example a liquid crystal display or the like.

The communications section 24 is an interface for communicating data with external equipment such as the camera 30 and the like.

The memory section 25 is structured by a non-volatile external memory apparatus such as a hard disc or the like. As shown in Fig. 3, the memory section 25 memorizes a work recognition program 25A, work procedure information 25B, break information 25C and so forth.

The CPU 21A is an example of a computer. The meaning of the term "computer" as used herein is intended to refer to broadly defined processors, encompassing general-purpose processors (for example, a CPU) and dedicated processors (for example a graphics processing unit (GPU), application-specific integrated circuit (ASIC), field programmable gate array (FPGA), programmable logic device or the like).

The work recognition program 25A is memorized at a non-volatile, non-transitory memory medium, or may be provided by being distributed via a network and installed as appropriate at the work recognition device 20.

A CD-ROM (compact disc read-only memory), magneto-optical disc, HDD (hard disk drive), DVD-ROM (digital versatile disc read-only memory), flash memory, memory card and so forth are envisaged as examples of a non-volatile, non-transitory memory medium.

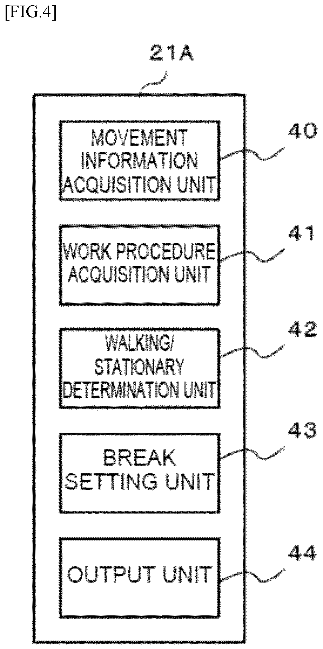

Fig. 4 is a block diagram showing functional structures of the CPU 21A of the work recognition device 20. As shown in Fig. 4, the CPU 21A functionally includes the functional units of a movement information acquisition unit 40, a work procedure acquisition unit 41, a walking/stationary determination unit 42 that serves as an example of a movement/standstill determination unit, a break setting unit 43 and an output unit 44. The CPU 21A functions as these functional units by reading and executing the work recognition program 25A memorized at the memory section 25.

The movement information acquisition unit 40 acquires movement information relating to movements of the worker W. More specifically, the movement information acquisition unit 40 acquires captured images, in which the camera 30 images the worker W and the workbenches TB1 to TB8, as the movement information. Movement information of the worker may be acquired by using motion sensors or the like instead of the camera 30.

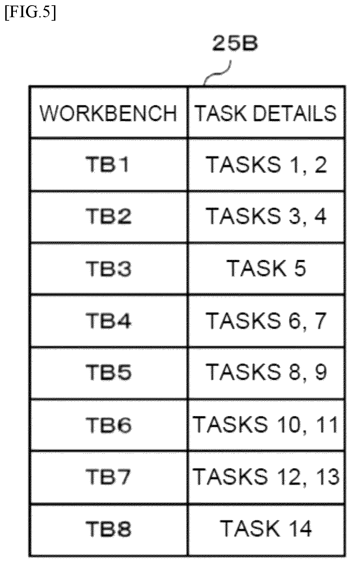

By reading the work procedure information 25B from the memory section 25, the work procedure acquisition unit 41 acquires the work procedure information 25B relating to a predefined work procedure, which is a series of tasks to be performed at plural workbenches by the worker W. As shown in Fig. 5, the work procedure information 25B is table data representing associations between the workbenches TB and details of the tasks to be performed at the workbenches TB. The work procedure information 25B is memorized at the memory section 25 beforehand.

The walking/stationary determination unit 42 determines when the worker W is walking and stationary on the basis of the movement information. The term "stationary" refers to any state that is not walking. Thus, the meaning of "determines when the worker W is walking and stationary" is, specifically, determining whether or not the worker W is walking and determining that the worker W is stationary when not determined to be walking. The meaning of the term "stationary" refers to a state in which the body of the worker W in general is stationary. Thus, a state in which the worker W is working at one location is regarded as a state in which the worker W is stationary. Note that walking is an example of being in movement and being stationary is an example of being in standstill. The meaning of the term "in movement" is intended to encompass states of jogging and the like in addition to walking. The meaning of the term "in standstill" is intended to encompass states in which the worker W is not in movement, including states in which the worker is moving at a location as well as states in which the body of the worker is not moving at all.

The walking/stationary determination unit 42 identifies positions of joints of the worker W on the basis of captured images serving as the movement information acquired by the movement information acquisition unit 40. The walking/stationary determination unit 42 then determines whether the worker W is walking or stationary on the basis of the identified positions of the joints of the worker W.

More specifically, the walking/stationary determination unit 42 determines when the worker W is walking and stationary on the basis of movement amounts of a central position of a circumscribed area circumscribing all of the identified joints of the worker W, in other words, a bounding box. In the present exemplary embodiment, the bounding box is a quadrilateral shape such as a rectangle, a square or the like circumscribing all of the joints of the worker W. However, shapes of the bounding box are not limited thus.

A publicly known technique known as "OpenPose", which is described in Reference Document 1 mentioned below, may be used as a method for identifying the joints of the worker W. With OpenPose, skeletal information of a worker W may be detected from a captured image. More specifically, the skeletal information includes a location of the body of the worker W and coordinates of characteristic points such as joints and the like, link information defining links that connect the characteristic points, and labels representing body parts of the characteristic points. For example, the characteristic points include parts of the face of the worker W, such as the eyes, nose and the like, and joints such as the neck, shoulders, elbows, wrists, waist, knees, ankles and so forth.

OpenPose employs a trained model for which a learning model that inputs captured images and outputs skeletal information is trained using numerous captured images as teaching data. A publicly known technique such as, for example, CNN (regions with conversational neural networks) or the like can be used as a training method to provide the trained model.

Reference Document 1: "OpenPose: Realtime Multi-Person 2D Pose Estimation using Part Affinity Fields", Zhe Cao, Student Member, IEEE, Gines Hidalgo, Student Member, IEEE, Tomas Simon, Shih-En Wei, and Yaser Sheikh, IEEE TRANSACTIONS ON PATTERN ANALYSIS AND MACHINE INTELLIGENCE.

The walking/stationary determination unit 42 may determine when the worker W is walking and stationary on the basis of movement amounts of, of the identified joints of the worker W, the positions of joints representing the torso of the worker W.

The break setting unit 43 sets breaks between the tasks in the series of tasks on the basis of the work procedure information 25B acquired by the work procedure acquisition unit 41 and results of determining when the worker W is walking and stationary by the walking/stationary determination unit 42. The meaning of the term "breaks between tasks" includes start times and end times of the respective tasks.

The output unit 44 outputs the break information 25C relating to the breaks set between the tasks. The break information 25C is table data representing associations between task details, task start times and task end times. The break information 25C is described in detail below.

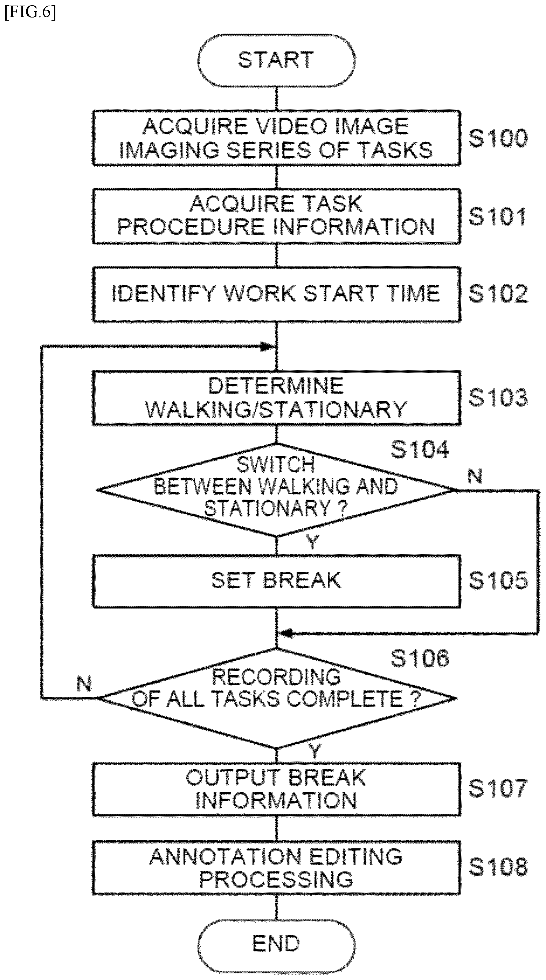

Now, work recognition processing that is executed by the CPU 21A of the work recognition device 20 is described with reference to the flowchart shown in Fig. 6.

In step S100, the CPU 21A acquires a video image in which the camera 30 images a situation in which the worker W is performing the series of tasks 1 to 14 at the workbenches TB1 to TB8.

In step S101, the CPU 21A acquires the work procedure information 25B memorized at the memory section 25 by reading the work procedure information 25B.

In step S102, the CPU 21A identifies a start time of the series of tasks on the basis of the video image acquired in step S100. For example, an operator may replay the video image and assign a start time at which the worker W starts task 1 at workbench TB1, or the CPU 21A may identify a start time at which the worker W starts task 1 at workbench TB1 by image recognition processing.

In step S103, the CPU 21A determines when the worker W is walking and stationary on the basis of the video image acquired in step S100. That is, the CPU 21A determines whether the worker W is in a walking state or a stationary state. More specifically, the CPU 21A reads a plural number of chronologically successive frame images from the video image acquired in step S 100 and, by executing processing using the above-mentioned OpenPose, identifies positions of the joints of the worker W in each of the plural frame images that are read. The CPU 21A identifies whether or not the worker W is walking in the plural frame images on the basis of movement amounts of a central position of bounding boxes circumscribing all of the identified joints of the worker W in the respective plural frame images. In the present exemplary embodiment, as mentioned above, a state in which the worker is not walking is treated as a stationary state.

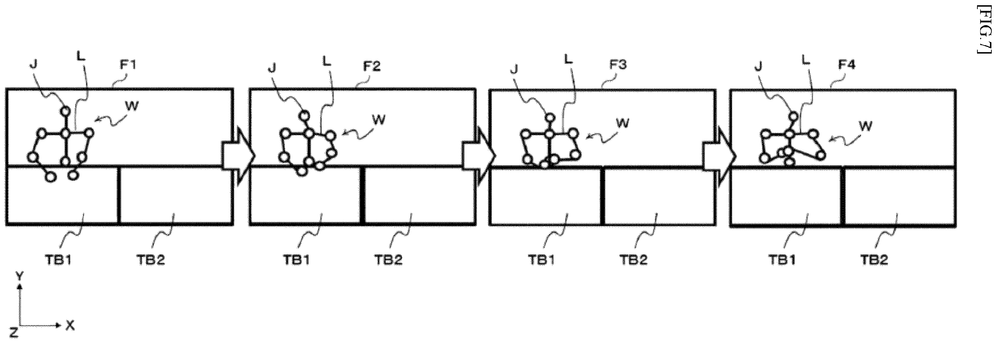

More specifically, a situation is described below in which, as shown in Fig. 7, whether or not the worker W is walking is determined on the basis of four frames, frame images F1 to F4. Below, to facilitate description, a situation is described in which the workbenches TB1 and TB2 are disposed close together in direction X, as depicted in Fig. 7. Note that a number of frame images to be used in determining whether or not the worker is walking is not limited to four frames.

As illustrated in Fig. 7, executing processing using OpenPose on the frame images F1 to F4 provides information on positions of joints J of the worker W and links L that connect the joints J.

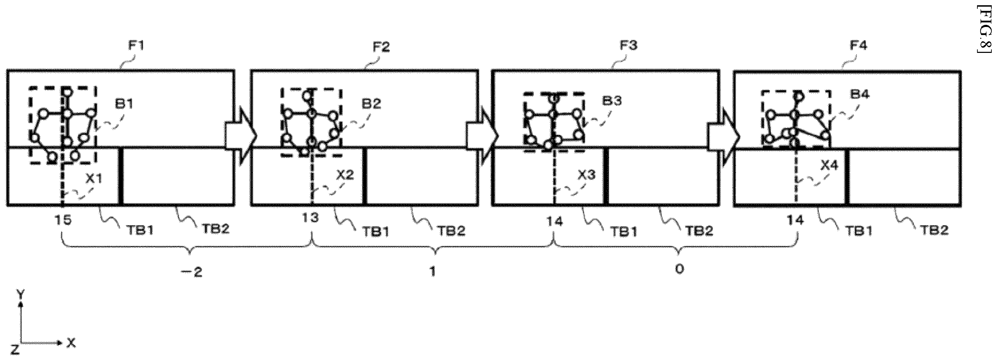

As shown in Fig. 8, bounding boxes B1 to B4 circumscribing all of the joints J of the worker W are found for the frame images F1 to F4, and central positions X1 to X4 in the X direction of these bounding boxes B1 to B4 are calculated. In the example in Fig. 8, X1=15, X2=13, X3=14 and X4=14.

Then, movement amounts and movement directions of the central position in the X direction between the frame images are found. Specifically, a calculated movement amount in the X direction of the central position between frame images F1 and F2 is M12, a calculated movement amount in the X direction of the central position between frame images F2 and F3 is M23, and a calculated movement amount in the X direction of the central position between frame images F3 and F4 is M34. In the example in Fig. 8, M12=-2, M23=1, and M34=0.

A calculated movement direction in the X direction of the central position between frame images F1 and F2 is D12, a calculated movement direction in the X direction of the central position between frame images F2 and F3 is D23, and a calculated movement direction in the X direction of the central position between frame images F3 and F4 is D34. If the movement direction being the right direction is represented by "R", the left direction is represented by "L", and a zero movement amount is represented by "N", in the example in Fig. 8, D12=L, D23=R and D34=N.

To determine whether or not the worker W is walking, a determination is made as to whether walking conditions are satisfied in accordance with the movement amounts and movement directions of the central position in the X direction between the frame images. More specifically, the walking conditions may be that all of the movement amounts M12, M23 and M34 are at least a predefined threshold amount and that all of the movement directions D12, D23 and D34 are "R", the direction of a workbench at which the next task is to be performed. When the walking conditions are satisfied, the worker W is determined to be walking toward workbench TB2 to perform the next task. The threshold value is set to a value at which the worker W can be judged to be walking, and is set in advance on the basis of, for example, previously observed measurements of a relationship between movements of the worker W and movement amounts in frame images. In the present exemplary embodiment, as an example, the threshold value is set to 2. Thus, the walking conditions are not satisfied in the example in Fig. 8, and therefore a determination is made that the worker W is not walking from workbench TB1 toward workbench TB2. That is, the worker W is determined to be stationary.

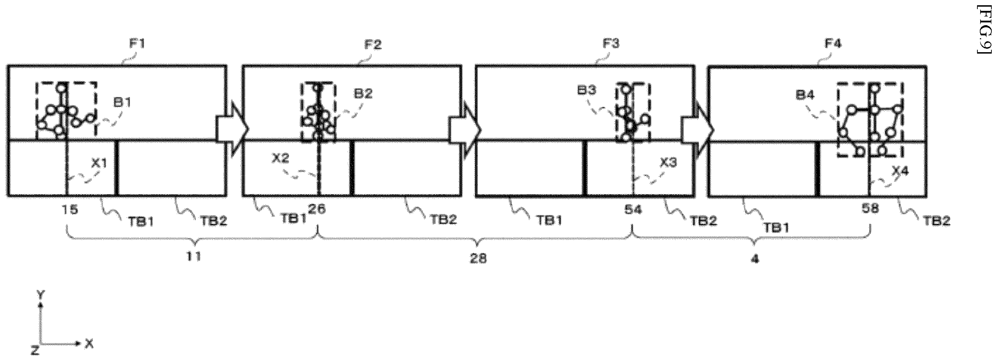

Fig. 9 shows an example in which the worker W is determined to be walking from workbench TB1 toward workbench TB2. In the example in Fig. 9, X1=15, X2=26, X3=54 and X4=58. Thus, M12=11, M23=28, M34=4, and D12=D23=D34=R. In this situation, the walking conditions described above are satisfied. Therefore, the worker W is determined to be walking from workbenchTB1 toward workbench TB2.

Thus, whether or not the worker W is walking toward the next workbench TB is determined for each set of four frames.

In step S104, the CPU 21A makes a determination as to whether there has been a switch between walking and stationary in step S103. That is, the CPU 21A makes a determination as to whether the state of the worker W determined in the previous execution of step S 103 and the state of the worker W determined in the most recent execution of step S 103 have switched from walking to stationary, and whether the states have switched from stationary to walking.

If the state has switched from walking to stationary or has switched from stationary to walking, the CPU 21A proceeds to step S105. On the other hand, if the state remains walking or the state remains stationary, the CPU 21A proceeds to step S106.

In step S105, the CPU 21A sets the time of the switch from walking to stationary or the switch from stationary to walking as a break between tasks. When the timing of a switch from walking to stationary is set as a break, the CPU 21A determines that the worker W has moved to the next workbench.

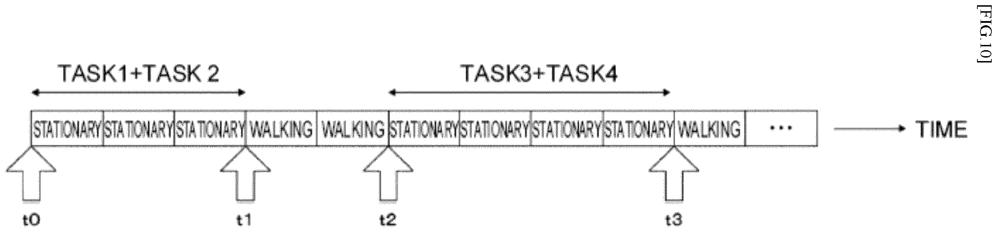

As shown in, for example, Fig. 10, as results of determining whether the worker W is walking at four-frame intervals, a time t1 of a switch from stationary to walking, a time t2 of a switch from walking to stationary, and a time t3 of a switch from stationary to walking are set as breaks in action of the worker W. More specifically, the time of each switch from stationary to walking is set as a task end time, the timing of each switch from walking to stationary is set as a task start time, and these are recorded in the break information 25C.

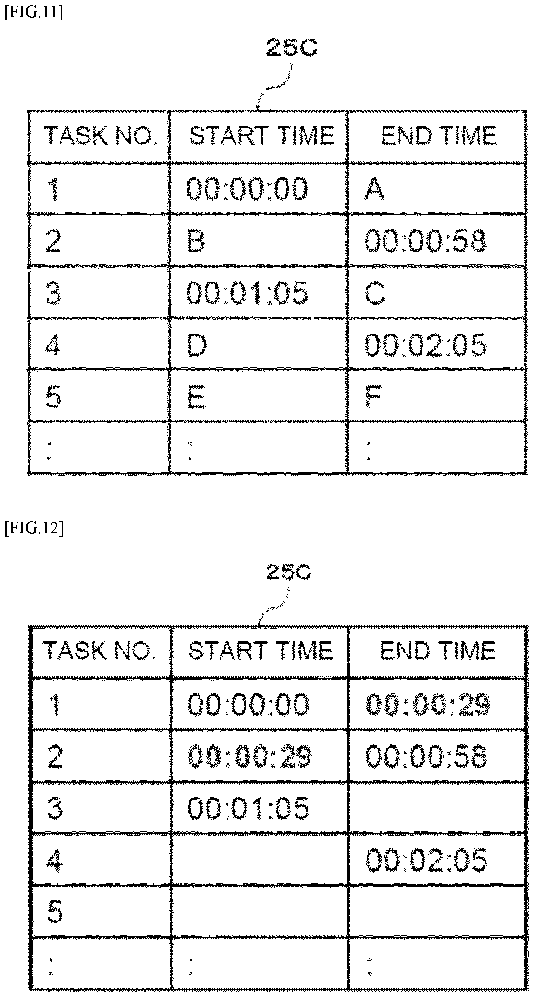

As shown in Fig. 11, the break information 25C is, for example, a data table depicting associations between task numbers, task start times and task end times.

As is shown in Fig. 10, a stationary state continues from the start time t0 of task 1 identified in step S102, and switches to walking at time t1. Referring to the work procedure information 25B shown in Fig. 5, because the task details at workbench TB1 are tasks 1 and 2, it can be supposed that tasks 1 and 2 are performed between times t0 and t1. Accordingly, as shown in Fig. 11, 00:00:00 is recorded as the start time of task 1 and 00:00:58, which is the time of t1, is recorded as the end time of task 2. That is, the work duration of tasks 1 and 2 is 58 seconds.

As is also shown in Fig. 10, time t2 of a switch from walking to stationary can be supposed to be the start time of task 3. Referring to the work procedure information 25B shown in Fig. 5, because the task details at workbench TB2 are tasks 3 and 4, it can be supposed that time t3 of a switch from stationary to walking is the time that task 4 ends. Accordingly, as shown in Fig. 11, 00:01:05, which is the time of t2, is recorded as the start time of task 3 and 00:02:05, which is the time of t3, is recorded as the end time of task 4. In this example, a movement time when the worker W ends task 2 and moves from workbench TB1 to workbench TB2 is 7 seconds, and the work duration of tasks 3 and 4 is one minute.

The timing of t2, at which the state of the worker W switches from walking to stationary, is a timing when the worker W has moved from workbench TB1 to workbench TB2. Therefore, when the timing of t2 is detected, it may be determined that the worker W has moved from workbench TB1 to workbench TB2.

As shown in Fig. 11, because the two tasks 1 and 2 are performed at workbench TB1, an end time A of task 1 and a start time B of task 2 are unclear. Similarly, because the two tasks 3 and 4 are performed at workbench TB2, an end time C of task 3 and a start time D of task 4 are unclear.

Accordingly, when a plural number of tasks are performed at a single workbench, start times and end times of the respective tasks are recorded by dividing a work duration from the start time of the first of the plural tasks to the end time of the last of the plural tasks by the number of tasks.

In the example in Fig. 10, the work duration of tasks 1 and 2 is 58 seconds and the number of these tasks is two. Therefore, as shown in Fig. 12, the end time of task 1 is set to 58/2 = 29 seconds. Task 2 is performed at the same workbench TB1 as task 1. The start time of task 2 is set to be the same as the end time of task 1, which is 29 seconds.

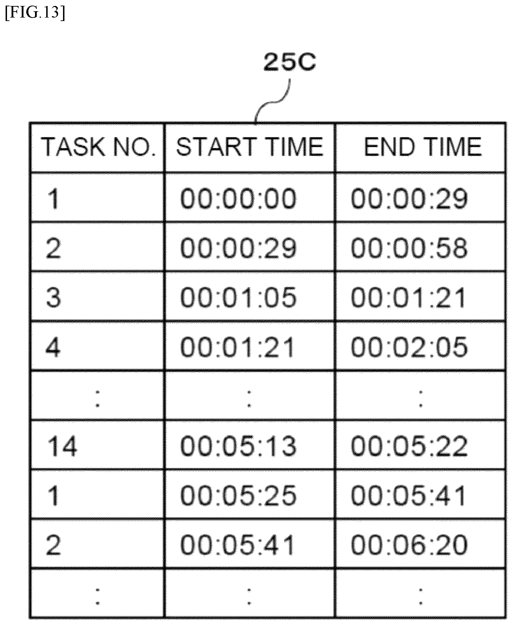

In step S106, the CPU 21A makes a determination as to whether recording to the break information 25C has been completed for all of the series of tasks. More specifically, the CPU 21A refers to the work procedure information 25B, acquires the number of tasks in the series of tasks, and makes a determination as to whether start times and end times have been recorded in the break information 25C for all of the acquired number of tasks. For example, a determination is made as to whether start times and end times have been recorded for all of tasks 1 to 14 as illustrated in Fig. 13.

When recording to the break information 25C has been completed for all tasks in the series of tasks, as in the example in Fig. 13, the CPU 21A proceeds to step S107. On the other hand, when recording to the break information 25C has not been completed for all tasks in the series of tasks, the CPU 21A proceeds to step S103.

In step S107, the CPU 21A outputs and memorizes the break information 25C recording the start times and end times of all the tasks at the memory section 25.

In step S108, the CPU 21A accepts editing processing by an operator for annotating the video image acquired in step S100, and executes editing processing for editing the video image in accordance with operations by the operator. Using the break information 25C at this time enables easy switching of a replay position of the video image to start times of tasks and the like. Therefore, the burden of work in editing annotations is moderated.

Thus, in the present exemplary embodiment, on the basis of a video image imaging work of a worker W, timings at which the state of the worker W switches from walking to stationary and timings at which the state switches from stationary to walking are set as task breaks. Thus, when the worker W performs work at plural workbenches TB, breaks in the work may be set easily.

In the present exemplary embodiment, a situation is described in which determinations as to whether the worker W is walking are made on the basis of movement amounts in the X direction of the central position of bounding boxes circumscribing all joints of the worker W. However, if movement amounts of the worker W when moving between the workbenches TB are greater in the Y direction than in the X direction, determinations as to whether the worker W is walking may also be made on the basis of movement amounts in the Y direction of the central position of the bounding boxes. Further, centroid positions of the bounding boxes may be calculated, and determinations as to whether the worker W is walking may be made on the basis of movement amounts of the calculated centroid position in the XY plane.

In the present exemplary embodiment, a situation is described in which determinations as to whether the worker W is walking are made on the basis of movement amounts in the X direction of the central position of bounding boxes circumscribing all joints of the worker W, but a method of determining walking is not limited thus. For example, among the joints of the worker W, determinations as to whether a worker W is walking may be made on the basis of movement amounts of positions of joints representing the torso. This is because it can be supposed that when a worker W is performing a task, the parts that make large movements are the arms and hands, and the position of the torso barely moves at all. Joints representing the torso means, for example, joints at the head, neck and waist. Accordingly, it is sufficient to calculate average positions of the joints of the head, neck and waist in the X direction and make determinations as to whether the worker W is walking on the basis of movement amounts of the calculated average positions.

The exemplary embodiment described above is no more than an exemplary description of a structural example of the present disclosure. The present disclosure is not to be limited by the specific mode described above; numerous modifications are applicable within the scope of the technical gist of the disclosure.

The work recognition processing that, in the exemplary embodiment described above, is executed by a CPU reading software (a program) may be executed by various kinds of processor other than a CPU. Examples of processors in these cases include a PLD (programmable logic device) in which a circuit configuration can be modified after manufacturing, such as an FPGA (field-programmable gate array) or the like, a dedicated electronic circuit which is a processor with a circuit configuration that is specially designed to execute recognition processing, such as an ASIC (application-specific integrated circuit) or the like, and so forth. The work recognition processing may be executed by one of these various kinds of processors, and may be executed by a combination of two or more processors of the same or different kinds (for example, plural FPGAs, a combination of a CPU with an FPGA, or the like). Hardware structures of these various kinds of processors are, to be more specific, electronic circuits combining circuit components such as semiconductor components and the like.

The disclosures of Japanese Patent Application No. 2022-038635 are incorporated into the present specification by reference in their entirety. All references, patent applications and technical specifications cited in the present specification are incorporated by reference into the present specification to the same extent as if the individual references, patent applications and technical specifications were specifically and individually recited as being incorporated by reference.

## Claims

1. A work recognition device, comprising:
a movement information acquisition unit that acquires movement information relating to movements of a worker;
a work procedure acquisition unit that acquires work procedure information relating to a predefined work procedure of a series of tasks to be performed by the worker at a plurality of workbenches;
a movement/standstill determination unit that determines when the worker is in movement and at a standstill based on the movement information;
a break setting unit that sets breaks between tasks of the series of tasks based on the work procedure information and results of determining when the worker is in movement and at a standstill; and
an output unit that outputs break information relating to the set breaks between the tasks.

2. The work recognition device according to claim 1, wherein:
in a case in which the movement/standstill determination unit determines that a state of the worker has switched from a standstill to movement, the break setting unit records an end time of one of the tasks in the break information for setting a break, and
in a case in which the movement/standstill determination unit determines that the state of the worker has switched from movement to a standstill, the break setting unit records a start time of one of the tasks in the break information for setting a break.

3. The work recognition device according to claim 1, wherein:
the movement information is a captured image imaging the worker, and
the movement/standstill determination unit determines when the worker is in movement and at a standstill based on positions of joints of the worker which are identified based on the captured image.

4. The work recognition device according to claim 3, wherein the movement/standstill determination unit determines when the worker is in movement and at a standstill based on movement amounts of a central position of a circumscribed area circumscribing all identified joints of the worker.

5. The work recognition device according to claim 3, wherein the movement/standstill determination unit determines when the worker is in movement and at a standstill based on movement amounts of a position of, among identified joints of the worker, a joint representing the torso.

6. A work recognition method including a computer executing processing comprising:
acquiring movement information relating to movements of a worker;
acquiring work procedure information relating to a predefined work procedure of a series of tasks to be performed by the worker at a plurality of workbenches;
determining when the worker is in movement and at a standstill based on the movement information;
setting breaks between tasks of the series of tasks based on the work procedure information and results of determining when the worker is in movement or at a standstill; and
outputting break information relating to the set breaks between the tasks.

7. A work recognition program executable by a computer to execute processing comprising:
acquiring movement information relating to movements of a worker;
acquiring work procedure information relating to a predefined work procedure of a series of tasks to be performed by the worker at a plurality of workbenches;
determining when the worker is in movement and at a standstill based on the movement information;
setting breaks between tasks of the series of tasks based on the work procedure information and results of determining when the worker is in movement or at a standstill; and
outputting break information relating to the set breaks between the tasks.
